# EUROPÄISCHE PATENTSCHRIFT

(11) **EP 4 375 046 B1**
(45) Veröffentlichungstag und Bekanntmachung des Hinweises auf die Patenterteilung: **03.09.2025**
(21) Anmeldenummer: 23207107.6
(22) Anmeldetag: 31.10.2023
(51) Int. Cl.: B29C 49/42, B29C 49/06, B65G 51/03, B29K 67/00, B29L 31/00

(54) **TRANSPORTVORRICHTUNG ZUM TRANSPORT VON VORFORMLINGEN, BLASFORMANLAGE SOWIE VERFAHREN ZUM TRANSPORT**
TRANSPORT DEVICE FOR TRANSPORTING PREFORMS, BLOW MOULDING SYSTEM AND METHOD FOR TRANSPORTING
DISPOSITIF DE TRANSPORT POUR TRANSPORTER DES PRÉFORMES, INSTALLATION DE MOULAGE PAR SOUFFLAGE AINSI QUE PROCÉDÉ DE TRANSPORT

(30) Priorität: 28.11.2022 DE 102022131401
(43) Veröffentlichungstag der Anmeldung: 29.05.2024
(73) Patentinhaber: KHS GmbH, 44143 Dortmund (DE)
(72) Erfinder: Heller, Alexander, 22941 Bargteheide (DE)
(74) Vertreter: Andrejewski - Honke Patent- und Rechtsanwälte Partnerschaft mbB

(56) Entgegenhaltungen:
- EP-A1- 3 165 345
- DE-A1- 102009 009 866
- DE-A1- 102009 016 593
- US-A- 4 284 370
- US-A1- 2002 192 038

## Beschreibung

Die vorliegende Erfindung betrifft eine Transportvorrichtung zum Transport von Behältern, insbesondere von Vorformlingen, mit einer sich entlang einer Förderrichtung erstreckenden Fördergasse und einem parallel dazu angeordneten Antriebskanal, wobei die Fördergasse eine Behälterführung mit einem sich in Förderrichtung erstreckenden Führungsschlitz aufweist und wobei eine erste Gruppe von oberhalb des Führungsschlitzes angeordneten Fluidkanälen vorgesehen ist, welche fluidwirkend mit der Fördergasse und dem zumindest einen Antriebskanal verbunden ist.

Die Erfindung bezieht sich insbesondere auf Transportvorrichtungen aus der Getränkeindustrie. Entsprechend handelt es sich bei den Behältern vorzugsweise um Getränkebehälter, wobei bei derartigen Transportvorrichtungen üblicherweise Vorformlinge bzw. sogenannte Preforms transportiert werden. Diese Vorformlinge werden im Zuge einer Blasumformung zu Getränkebehältern ausgeformt. Hierzu müssen die Vorformlinge über eine Zuführeinrichtung der Blaseinrichtung zugeführt werden. Innerhalb der Zuführeinrichtung werden die Vorformlinge vereinzelt und ausgerichtet und sodann innerhalb einer Heizvorrichtung aufgewärmt. Das Aufheizen erweicht das Material der Vorformlinge, wobei es sich üblicherweise um einen thermoplastischen Kunststoff z. B. Polyethylenterephthalat (PET) handelt.

Innerhalb der Blaseinrichtung erfolgt dann das Einbringen eines unter Druck stehenden Fluids in den Innenbereich der Vorformlinge, wodurch sich diese aufweiten und in einer vordefinierten Kontur eingepresst werden. Die sich so herausgebildeten Getränkebehälter können dann in einem anschließenden Prozessschritt befüllt, verschlossen und verpackt werden.

Transportvorrichtungen der eingangs beschriebenen Art sind grundsätzlich aus dem Stand der Technik bekannt, wobei insbesondere die DE 10 2009 009866 A1, die DE 10 2009 016593 A1, die US 2002/192038 A1 und die US 4 284 370 A einen gattungsgemäßen Stand der Technik bilden. Die Bewegung wird durch das Einbringen eines Fluidstroms bewirkt. Bei diesem Fluidstrom handelt es sich üblicherweise um einen Luftstrom, welcher gerichtet über die Fluidkanäle auf die Vorformlinge eingebracht wird, sodass diese infolgedessen entlang einer vordefinierten Transportstrecke innerhalb der Fördergasse bewegt werden. Der Fluidstrom wird hierbei zunächst in einen Antriebskanal eingebracht, wobei der Antriebskanal und die Fördergasse parallel zueinander angeordnet sind. In dem Antriebskanal verteilt sich das Fluid und wird sodann über die Vielzahl hintereinander angeordneter Fluidkanäle in die Fördergasse eingebracht. Hierbei wirken der Fluidstrom bzw. die einzelnen Teilfluidströme auf einen oberen Bereich der Vorformlinge ein, welcher üblicherweise bereits mit einem Außengewinde ausgebildet ist, wobei das Außengewinde der Aufnahme einer Verschlusskappe dient. Entsprechend sind die Fluidkanäle oberhalb des Führungsschlitzes angeordnet, wobei die Vorformlinge den Führungsschlitz durchgreifen, sodass entsprechend der fertig ausgebildete obere Bereich oberhalb des Führungsschlitzes und der später im Zuge einer Blassumformung umzuformende untere Bereich unterhalb des Führungsschlitzes angeordnet ist.

Im Gegensatz zu sogenannten Transportrutschen werden die Vorformlinge aktiv angetrieben, während bei einer Transportrutsche die Bewegung der Preforms allein aufgrund des Eigengewichts und einer gewissen Schrägstellung der Fördergasse bewirkt wird. Im Gegensatz dazu kann bei einer mit einem Fluidstrom betriebenen Transportvorrichtung die Fördergasse im Allgemeinen horizontal angeordnet sein, wobei sich der Anwendungsbereich gegenüber den Transportrutschen wesentlich erweitert.

Transportvorrichtungen der eingangs beschriebenen Art haben sich in der Praxis grundsätzlich bewährt. Allerdings hat sich gezeigt, dass die Vorformlinge aufgrund des oberhalb des Führungsschlitzes einwirkenden Fluidstroms verkippen und sich hierdurch im Bereich des Neckringes übereinander schieben können. Hierdurch werden die Vorformlinge einerseits stark mechanisch beansprucht. Zugleich können sich die Vorformlinge auch derart miteinander verhaken, dass der Transport gestört und sogar blockiert wird. Auch die Führung kann aufgrund der Reibung zwischen den Vorformlingen und der Oberfläche der Führung stark beansprucht werden.

Vor diesem Hintergrund liegt der Erfindung die Aufgabe zugrunde, eine Transportvorrichtung anzugeben, welche einen ungestörten Betrieb insbesondere bei hohen Behälterdurchsätzen ermöglichen.

Gegenstand und Lösung dieser Aufgabe ist eine Transportvorrichtung gemäß Patentanspruch 1. Demnach ist zusätzlich zur ersten Gruppe von Führungskanälen eine zweite Gruppe von unterhalb des Führungsschlitzes angeordneten Führungskanälen vorgesehen, wobei die unterhalb des Führungsschlitzes angeordneten Fluidkanäle der zweiten Gruppe mit der Fördergasse und mit dem Antriebskanal fluidwirkend verbunden ist.

Durch eine solche Ausgestaltung werden die Behälter, insbesondere die Vorformlinge, einerseits oberhalb des Führungsschlitzes und andererseits unterhalb des Führungsschlitzes mit einem Fluidstrom beansprucht, wobei durch die zweite Gruppe von Fluidkanälen ein gegenüber der ersten Gruppe von Fluidkanälen gegensätzliches Kippmoment erzeugt wird, sodass eine Verkippung im Bereich der Führung wirksam reduziert, insbesondere vermieden, wird. Infolge dessen liegen die Behälter gleichmäßig auf der Führung auf, wobei insbesondere bei Vorformlingen die Gefahr verringert wird, dass diese im Bereich des Neckrings übereinander geschoben werden. Entsprechend wird die Gefahr einer Klemmung wirksam reduziert und auch die Behälter sowie die Führung deutlich weniger stark mechanisch beansprucht als bei den bislang bekannten Transportvorrichtungen.

Gemäß einer bevorzugten Ausgestaltung der Erfindung sind die erste und die zweite Gruppe von Fluidkanälen in einer vertikalen Richtung bezüglich einer Führungsfläche der Behälterführung äquidistant angeordnet. Unter der Führungsfläche wird die Fläche der Führung verstanden, auf welcher die Behälter, insbesondere die Vorformlinge mit einem Neckring, aufliegen. Entsprechend handelt es sich um eine in vertikaler Richtung nach oben zeigende Fläche, welche als Abstützung für die Behälter die relevante Kippebene darstellt, über die die Behälter verkippen können.

Durch eine äquidistante Anordnung der Führungskanäle kann sichergestellt werden, dass bei gleich einwirkenden Fluidströmen ein gleichgroßes Kippmoment um die Führungsebene erzeugt wird. Selbstverständlich sind aber auch Ausgestaltungen denkbar, bei denen sich die Anordnung der Führungskanäle zwischen der ersten und der zweiten Gruppe unterscheidet. Dies ist insbesondere dann sinnvoll, wenn beispielsweise die zweite Gruppe von Fluidkanälen mit einem geringeren oder größeren Fluidstrom betrieben wird.

Bevorzugt sind die Fluidkanäle der ersten und der zweiten Gruppe zwischen 5 und 30 mm, besonders bevorzugt zwischen 10 und 25 mm, in einer senkrecht zur Förderrichtung verlaufenden vertikalen Richtung voneinander beabstandet. Die Führungsfläche der Behälterführung und die Fluidkanäle der ersten, und oder der zweiten Gruppe sind bevorzugt zwischen 5 und 25 mm.

Eine besonders bevorzugte Ausgestaltung der Erfindung sieht ferner vor, dass die Fluidkanäle der zweiten Gruppe, bezüglich einer Draufsicht entlang der vertikalen Richtung versetzt zu den Fluidkanälen der ersten Gruppe angeordnet sind. Entsprechend sind die Fluidkanäle der ersten Gruppe bezüglich der Förderrichtung an anderen Positionen angeordnet als die Fluidkanäle der zweiten Gruppe. Alternativ kann auf einen solchen Versatz auch verzichtet werden, sodass entsprechend die Füllkanäle der ersten und der zweiten Gruppe bezüglich der Längsrichtung auf denselben Positionen angeordnet sind. Beide Varianten können je nach Einsatz der Transportvorrichtung von Vorteil sein. Durch eine Anordnung ohne Versatz wirken an denselben Positionen die Fluidströme auf die Vorformlinge ein, sodass ein sehr effektiver Ausgleich der Kippmomente bewirkt werden kann. Andererseits kann durch eine versetzte Anordnung ein gleichmäßigerer Antrieb der Behälter erfolgen, während zugleich die Kippmomente in ausreichender Art und Weise kompensiert werden. Die spezielle Anordnung kann sich dann insbesondere nach Art der zu transportierenden Behälter sowie dem Behälterdurchsatz richten.

Da über die Fluidkanäle der ersten und der zweiten Gruppe ein Fluidraum in die Fördergasse eingebracht werden soll, ist die zweite Gruppe fluidwirkend mit dem Antriebskanal zu verbinden. Entsprechend werden beide Gruppen von Fluidkanälen über denselben Antriebskanal mit dem Antriebsfluid versorgt. Hierbei ist dann sicherzustellen, dass der Antriebskanal über eine ausreichend große Höhe verfügt und zugleich, dass die Fluidkanäle beider Gruppen möglichst gleichmäßig und mit konstantem Fluidstrom versorgt werden können.

Eine bevorzugte Ausgestaltung der Erfindung sieht vor, dass der Antriebskanal und die Fördergasse jeweils über eine Seitenwandung voneinander getrennt sind, wobei die Fluidkanäle in der Seitenwandung angeordnet und/oder gebildet sind. Sofern die Fluidkanäle in der entsprechenden Seitenwandung gebildeten sind, handelt es sich insbesondere um Durchbrechungen in der Seitenwandung, insbesondere um Löcher, welche vorzugsweise rund oder aber auch eckig ausgebildet sind. Die zwischen dem Antriebskanal und der Fördergasse angeordnete Seitenwandung wird im Vorliegenden auch als erste Seitenwandung bezeichnet. Die gegenüberliegende Seitenwandlung der Fördergasse wird dann entsprechend als zweite Seitenwandung bezeichnet.

Bevorzugt sind ferner die Fluidkanäle der zweiten Gruppe bezüglich der Längsrichtung und einer senkrecht dazu verlaufenden Querrichtung schräg gestellt. Hierbei wird sich insbesondere an der Anordnung und Ausgestaltung der Fluidkanäle der ersten Gruppe orientiert, wobei die Fließkanäle beider Gruppen identisch angeordnet sein können. Insbesondere ist vorgesehen, dass die Fluidkanäle der ersten und/oder der zweiten Gruppe zumindest teilweise in Längsrichtung verlaufen und gegenüber der Querrichtung über einen Winkel schräg gestellt sind. Der Winkel beträgt vorzugsweise zwischen 20 und 40°, insbesondere zwischen 25 und 35°.

Darüber hinaus kann vorgesehen sein, dass die Fluidkanäle der zweiten Gruppe bezüglich der Vertikalrichtung schräg gestellt sind. Dementsprechend ist vorgesehen, dass die Fluidkanäle der zweiten Gruppe dazu eingerichtet sind, einen Fluidstrom zu erzeugen, welcher eine Strömungskomponente in vertikaler Richtung aufweist, wodurch den Behältern, insbesondere den Vorformlingen, ein geringfügiger Auftrieb bewirkt wird. Durch diesen Auftrieb kann die Reibung zwischen der Behälterführung und dem Behälter verringert werden, sodass ein wesentlich besserer und effektiverer Durchsatz von Behältern möglich ist. Zugleich wird auch die Führungsfläche deutlich weniger belastet.

Eine weitere bevorzugte Ausgestaltung sieht vor, dass der Antriebskanal mit einem Fluidverdichter verbunden ist, wobei der Fluidverdichter bevorzugt zur Verdichtung der Umgebungsluft eingerichtet ist. Selbstverständlich können auch mehrere Fluidverdichter an den Antriebskanal anschließen. Dies ist insbesondere dann sinnvoll, wenn mehrere Antriebskanäle in Längsrichtung hintereinander angeordnet sind.

Entsprechend erstreckt sich nicht ein Antriebskanal über die gesamte Länge der Fördergasse. Vielmehr sind mehrere Antriebskanäle vorgesehen, über die eine gleichmäßige Einleitung von Fluidströmen bewerkstelligt werden kann. Gemäß einer solchen Ausgestaltung weist dann jeder Antriebskanal einen eigenen Fluidverdichter auf. Alternativ ist es aber auch denkbar, lediglich einen Fluidverdichter vorzusehen, welcher dann sämtliche Antriebskanäle mit Fluid versorgt.

Bei dem Fluid handelt es sich insbesondere um Umgebungsluft, welche in dem entsprechenden Fluidverdichter verdichtet wird. Vor einer Einleitung in den Antriebskanal bzw. in die Antriebskanäle kann dann auch noch eine Filtereinheit vorgesehen sein, welche die Umgebungsluft filtert und wobei sodann die so gefilterte Luft eingeleitet wird.

Gegenstand der Erfindung ist ferner eine Blasformanlage mit einer Blaseinrichtung zum Blasumformen von Vorformlingen und zumindest einer Zuführeinrichtungen zur Zuführung der Vorformlinge in die Blaseinrichtung, wobei Zuführeinrichtungen zumindest eine erfindungsgemäße Transportvorrichtung aufweist. Insbesondere ist vor der Transportvorrichtung ein sogenannter Rollensortierer vorgesehen, welcher die einzelnen Vorformlinge ausrichtet, sodass diese gezielt in die Transportvorrichtung eingeleitet werden können.

In der Transportvorrichtung erfolgt dann eine gewisse Beschleunigung der Vorformlinge, sodass diese in einen insbesondere rotierenden Vereinzelungsstern eingeleitet werden können. In diesem Vereinzelungsstern werden die Vorformlinge dann so vereinzelt, dass diese in eine Heizvorrichtung übergeben werden können. Hinter der Heizvorrichtung ist die eigentliche Blaseinrichtung angeordnet.

Gegenstand der Erfindung ist ferner ein Verfahren zum Transport von Behältern, insbesondere in einer erfindungsgemäßen Transportvorrichtung, wobei die Behälter der Transportvorrichtung zugeführt und durch Beaufschlagung mit einem ersten Fluidstrom entlang einer Förderrichtung transportiert werden. Erfindungsgemäß werden die Behälter während des Transports mit einem zweiten Fluidstrom beaufschlagt, wobei der zweite Fluidstrom in vertikaler Richtung unterhalb des ersten Fluidstroms auf die Behälter einwirkt. Bei den Behältern handelt es sich bevorzugt um Vorformlinge.

Insbesondere weisen die Behälter einen sogenannten Neckring auf, über den die Behälter auf der Behälterführung aufliegen, wobei der erste Fluidstom oberhalb des Neckrings und der zweite Fluidstrom unterhalb des Neckrings auf die Behälter einwirken. Bei den Behältern handelt es sich insbesondere um Getränkebehälter, wobei die Verwendung von Vorformlingen bzw. Preforms als besonders bevorzugt angesehen wird.

Eine Weiterbildung des Verfahrens sieht vor, dass der erste und der zweite Luftstrom zumindest bezüglich einer Querrichtung entgegengesetzt auf die Vorformlinge einwirken. Dies kann beispielsweise dadurch erreicht werden, dass der erste Fluidstrom über eine erste Gruppe von Fluidkanälen und der zweite Fluidstrom über eine zweite Gruppe von Fluidkanälen eingeleitet wird, wobei diese Fluidkanäle an entgegengesetzten Seitenwandungen der Fördergasse angeordnet sind.

Darüber hinaus sieht eine bevorzugte Ausgestaltung der Erfindung vor, dass der zweite Fluidstrom eine in vertikaler Richtung nach oben gerichtete Geschwindigkeitskomponente aufweist. Entsprechend wirkt dieser zweite Luftstrom derart auf die Behälter ein, dass die von den Behältern auf die Behälterführung einwirkende Kraft verringert wird. Hierdurch wird auch die Reibung zwischen der Führungsfläche und der Behälter verringert.

Eine Weiterbildung sieht ferner vor, dass das Fluid des ersten und/oder des zweiten Fluidstroms Luft, insbesondere verdichtete Umgebungsluft ist.

Im Folgenden wird die Erfindung anhand von Ausführungsbeispielen erläutert. Es zeigen:
- Fig. 1, 2: eine Transportvorrichtung zum Transport von Vorformlingen in unterschiedlichen Ansichten,
- Fig. 3, 4: eine erfindungsgemäße Transportvorrichtung in unterschiedlichen Ansichten.

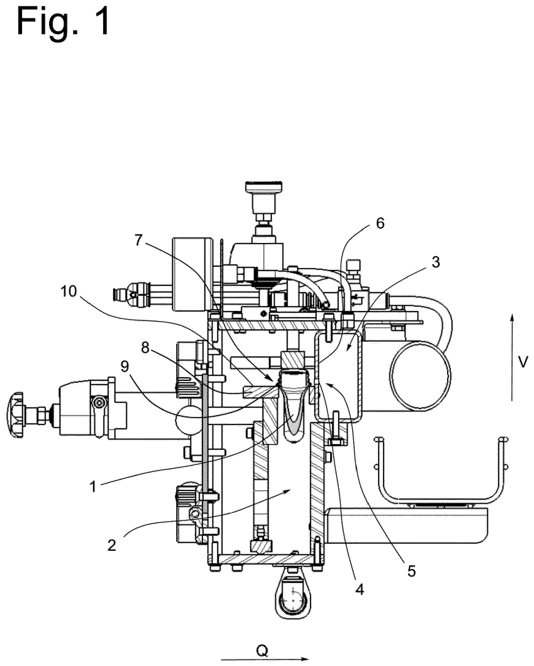

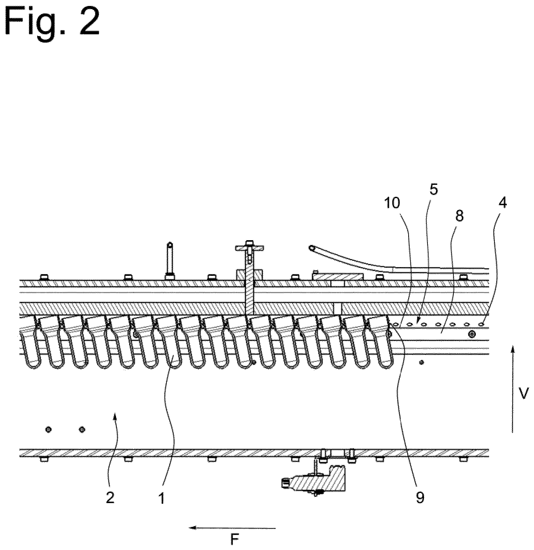

Die Fig. 1 und 2 zeigen eine Transportvorrichtung zum Transport von Vorformlingen 1 aus dem Stand der Technik. Hierbei weist die Transportvorrichtung eine Fördergasse 2 auf, welche sich entlang einer Förderrichtung F erstreckt. Entsprechend werden auch die Vorformlinge 1 entlang der Förderrichtung F transportiert.

Um einen solchen Transport zu ermöglichen, ist ein Antriebskanal 3 vorgesehen, welcher mit einem nicht näher dargestellten Fluidverdichter verbunden ist, sodass kontinuierlich ein Fluid, insbesondere verdichtete Umgebungsluft, in den Antriebskanal 3 eingeleitet werden kann. Dieses Fluid wird dann dazu genutzt, um die Vorformlinge 1 anzutreiben.

Hierzu erstreckt sich der Antriebskanal 3 parallel zu der Fördergasse 2 in Förderrichtung F und weist darüber hinaus eine Vielzahl von Fluidkanälen 4 auf, wobei diese Fluidkanäle 4 in Förderrichtung F hintereinander angeordnet sind und eine gemeinsame erste Gruppe 5 bilden.

Über diese Fluidkanäle 4, welche in einer der Fördergasse 2 zugewandten ersten Seitenwandung 6 gebildet sind, kann das Fluid in die Fördergasse 2 eintreten, wobei sich über jeden Fluidkanal 4 ein Teilfluidstrom ausbildet, welcher zumindest eine Komponente in Förderrichtung F aufweist, sodass die Vorformlinge 1 im Zuge der Einwirkung der Teilfluidströme in Förderrichtung F transportiert werden können. Entsprechend sind die Fluidkanäle 4 der ersten Gruppe 5 leicht schräg zur Förderrichtung F bzw. zur Querrichtung angeordnet.

Wie der Fig. 1 entnommen werden kann, weist die Fördergasse 2 einen Führungsschlitz 7 auf, welcher in einer Behälterführung 8 gebildet ist. Dieser Führungsschlitz 7 weist eine Breite in Querrichtung Q auf, welche einerseits so gewählt ist, dass die Vorformlinge 1 den Führungsschlitz 7 durchgreifen können. Andererseits können die Vorformlinge 1 aber auch mit einem Neckring 9 auf der Behälterführung bzw. auf einer Führungsfläche 10 aufliegen.

Wie man insbesondere Fig. 2 entnehmen kann, sind die Fluidkanäle 4 oberhalb des Führungsschlitzes 7 und insbesondere oberhalb der Führungsfläche 10 angeordnet, sodass die Vorformlinge 1 leicht verkippen. Dies hat zur Folge, dass die Vorformlinge 1 sich insbesondere mit Ihrem Neckring 9 übereinander schieben können und sich infolgedessen miteinander verklemmen. Dies ist insbesondere bei hohen Behälterdurchsätzen der Fall. Darüber hinaus wird hierdurch auch die Behälterführung 8 und insbesondere die Führungsfläche 10 aufgrund der Reibung stark belastet. Von daher wird angestrebt, dass die Vorformlinge 1 möglichst gerade in der Behälterführung 8 transportiert werden.

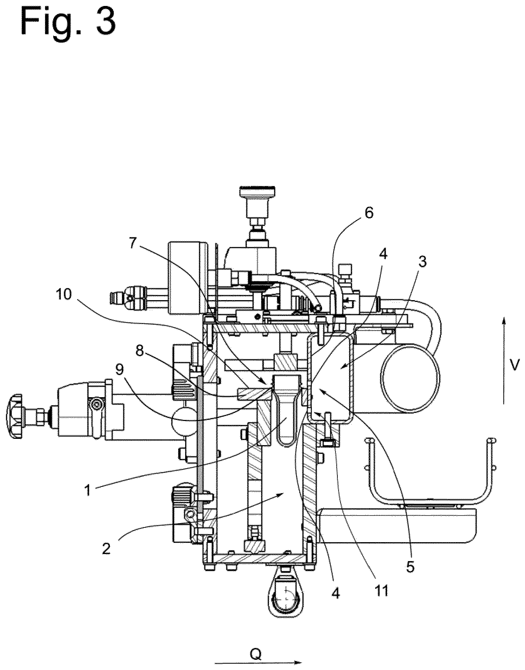

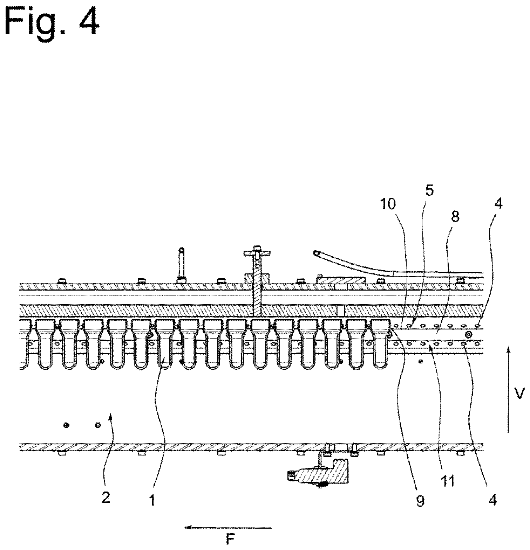

Vor diesem Hintergrund zeigen die Fig. 3 und 4 eine erfindungsgemäße Ausgestaltung, bei der eine zweite Gruppe 11 von Fluidkanälen 4 vorgesehen ist, wobei die zweite Gruppe 11 unterhalb der Behälterführung 8 und insbesondere unterhalb der Führungsfläche 10 angeordnet. Beide Gruppen 5, 11 von Fluidkanälen 4 werden über den gleichen Antriebskanal 3 mit dem Fluid versorgt und sind auch hinsichtlich ihrer Ausgestaltung und Einrichtung identisch ausgebildet. Zusätzlich ist es denkbar, dass die Fluidkanäle der zweiten Gruppe 11 auch teilweise in einer vertikalen Richtung verlaufen, sodass hierdurch ein gewisser Auftrieb in den Vorformlingen 1 erzeugt werden kann. Insbesondere dient die zweite Gruppe 11 von Fluidkanälen 4 aber dazu, die Vorformlinge 1 gleichmäßiger zu belasten und insbesondere ein gegenläufiges Kippmoment um die Führungsfläche 10 zu erzeugen. Im Ergebnis können die Vorformlinge 1 gemäß der Fig. 4 wesentlich gerader transportiert werden, wodurch sich die zuvor beschriebene Problematik verringert.

### Bezugszeichenliste

Vorformlingen 1
Fördergasse 2
Antriebskanal 3
Fluidkanälen 4
Gruppe 5
Seitenwandung 6
Führungsschlitz 7
Behälterführung 8
Neckring 9
Führungsfläche 10
Gruppe 11
Förderrichtung F
Richtung V
Querrichtung Q

## Patentansprüche

1. Transportvorrichtung zum Transport von Behältern, insbesondere von Vorformlingen (1), mit einer sich entlang einer Förderrichtung (F) erstreckenden Fördergasse (2) und einem parallel dazu angeordneten Antriebskanal (3), wobei die Fördergasse (2) eine Behälterführung (8) mit einem sich in Förderrichtung (F) erstreckenden Führungsschlitz (7) aufweist und wobei eine erste Gruppe (5) von oberhalb des Führungsschlitzes (7) angeordneten Fluidkanälen (4) vorgesehen ist, welche fluidwirkend mit der Fördergasse (2) und dem zumindest einen Antriebskanal (3) verbunden ist,
**dadurch gekennzeichnet, dass**
eine zweite Gruppe (11) von unterhalb des Führungsschlitzes (7) angeordneten Fluidkanälen (4) mit der Fördergasse (2) und mit dem Antriebskanal (3) fluidwirkend verbunden ist.

2. Transportvorrichtung nach Anspruch 1, **dadurch gekennzeichnet, dass** die Fluidkanäle (4) der ersten und der zweiten Gruppe (5, 11) zwischen 5 und 30 mm in einer senkrecht zur Förderrichtung (F) verlaufenden vertikalen Richtung (V) voneinander beabstandet sind.

3. Transportvorrichtung nach einem der vorangegangenen Ansprüche, **dadurch gekennzeichnet, dass** die Behälterführung (8) eine Führungsfläche (10) aufweist und wobei die Fluidkanäle (4) der zweiten Gruppe (11) zwischen 5 und 25 mm in vertikaler Richtung (V) von der Führungsfläche (10) beabstandet sind.

4. Transportvorrichtung nach einem der vorangegangenen Ansprüche, **dadurch gekennzeichnet, dass** die Fluidkanäle (4) der zweiten Gruppe (11) bezüglich einer Draufsicht entlang der vertikalen Richtung (V) versetzt zu den Fluidkanälen (4) der ersten Gruppe (5) angeordnet sind.

5. Transportvorrichtung nach einem der vorangegangenen Ansprüche, **dadurch gekennzeichnet, dass** der Antriebskanal (3) und die Fördergasse (2) jeweils über eine Seitenwandung (6) voneinander getrennt sind, wobei die Fluidkanäle (4) in der Seitenwandung (6) angeordnet und/oder gebildet sind.

6. Transportvorrichtung nach einem der vorangegangenen Ansprüche, **dadurch gekennzeichnet, dass** die Fluidkanäle (4) der zweiten Gruppe (11) bezüglich der Förderrichtung (F) und einer senkrecht dazu verlaufenden Querrichtung (Q) schräg gestellt sind.

7. Transportvorrichtung nach einem der vorangegangenen Ansprüche, **dadurch gekennzeichnet, dass** die Fluidkanäle (4) der zweiten Gruppe (11) bezüglich der vertikalen Richtung (V) schräg gestellt sind.

8. Transportvorrichtung nach einem der vorangegangenen Ansprüche, **dadurch gekennzeichnet, dass** der Antriebskanal (3) mit einem Fluidverdichter verbunden ist, wobei der Fluidverdichter bevorzugt zur Verdichtung der Umgebungsluft eingerichtet ist.

9. Blasformanlage mit einer Blaseinrichtung zur Blasumformung von Vorformlingen und zumindest einer Zuführeinrichtung zur Zuführung der Vorformlinge in die Blaseinrichtung, wobei die Zuführeinrichtung zumindest eine Transportvorrichtung nach einem der vorangegangenen Ansprüche aufweist.

10. Verfahren zum Transport von Behältern, insbesondere von Vorformlingen (1), in einer Transportvorrichtung nach einem der Ansprüche 1 bis 8, wobei die Behälter der Transportvorrichtung zugeführt und durch Beaufschlagung mit einem ersten Fluidstrom entlang einer Förderrichtung (F) transportiert werden, **dadurch gekennzeichnet, dass** die Behälter während des Transports mit einem zweiten Fluidstrom beaufschlagt werden, wobei der zweite Fluidstrom in vertikaler Richtung (V) unterhalb des ersten Fluidstroms auf die Behälter einwirkt.

11. Verfahren nach Anspruch 10, **dadurch gekennzeichnet, dass** die Behälter über einen Neckring (9) auf der Behälterführung (8) aufliegen, wobei der erste Fluidstrom oberhalb des Neckrings (9) und der zweite Fluidstrom unterhalb des Neckrings (9) auf die Behälter einwirken.

12. Verfahren nach Anspruch 10 oder 1, **dadurch gekennzeichnet, dass** der erste und der zweite Luftstrom zumindest bezüglich einer Querrichtung (Q) entgegengesetzt auf die Behälter einwirken.

13. Verfahren nach einem der Ansprüche 10 bis 12, **dadurch gekennzeichnet, dass** der zweite Fluidstrom eine in vertikaler Richtung (V) nach oben gerichtete Geschwindigkeitskomponente aufweist.

14. Verfahren nach einem der Ansprüche 10 bis 13, **dadurch gekennzeichnet, dass** das Fluid des ersten und/oder des zweiten Fluidstroms Luft, insbesondere verdichtete Umgebungsluft, ist.

## Claims

1. A transport device for transporting containers, particularly preforms (1), with a conveyor lane (2) that extends along a conveying direction (F) and a drive channel (3) that is arranged parallel to said conveyor lane, wherein the conveyor lane (2) has a container guide (8) with a guide slot (7) that extends in the conveying direction (F), and wherein a first group (5) of fluid channels (4), which is connected to the conveyor lane (2) and the at least one drive channel (3) in a fluidically active manner, is provided and arranged above the guide slot (7),
**characterized in that**
a second group (11) of fluid channels (4), which is arranged underneath the guide slot (7), is connected to the conveyor lane (2) and to the drive channel (3) in a fluidically active manner.

2. The transport device according to claim 1, **characterized in that** the fluid channels (4) of the first and the second group (5, 11) are spaced apart from one another by a distance between 5 and 30 mm in a vertical direction (V) extending perpendicular to the conveying direction (F).

3. The transport device according to one of the preceding claims, **characterized in that** the container guide (8) has a guide surface (10), wherein the fluid channels (4) of the second group (11) are spaced apart from the guide surface (10) by a distance between 5 and 25 mm in the vertical direction (V).

4. The transport device according to one of the preceding claims, **characterized in that** the fluid channels (4) of the second group (11) are arranged offset to the fluid channels (4) of the first group (5) along the vertical direction (V) with respect to a top view.

5. The transport device according to one of the preceding claims, **characterized in that** the drive channel (3) and the conveyor lane (2) respectively are separated from one another by a sidewall (6), wherein the fluid channels (4) are arranged and/or formed in the sidewall (6).

6. The transport device according to one of the preceding claims, **characterized in that** the fluid channels (4) of the second group (11) are inclined with respect to the conveying direction (F) and a transverse direction (Q) extending perpendicular thereto.

7. The transport device according to one of the preceding claims, **characterized in that** the fluid channels (4) of the second group (11) are inclined with respect to the vertical direction (V).

8. The transport device according to one of the preceding claims, **characterized in that** the drive channel (3) is connected to a fluid compressor, wherein the fluid compressor preferably is designed for compressing the ambient air.

9. A blow molding system with a blow molding device for blow molding preforms and at least one feed device for feeding the preforms into the blow molding device, wherein the feed device has at least one transport device according to one of the preceding claims.

10. A method for transporting containers, particularly preforms (1), in a transport device according to one of claims 1 to 8, wherein the containers are fed to the transport device and transported along a conveying direction (F) by being acted upon with a first fluid flow, **characterized in that** the containers are acted upon with a second fluid flow during the transport, wherein the second fluid flow acts upon the containers underneath the first fluid flow referred to the vertical direction (V).

11. The method according to claim 10, **characterized in that** the containers rest on the container guide (8) by means of a neck ring (9), wherein the first fluid flow acts upon the containers above the neck ring (9) and the second fluid flow acts upon the containers underneath the neck ring (9).

12. The method according to claim 10 or 1, **characterized in that** the first and the second air flow act upon the containers opposite to one another at least with respect to a transverse direction (Q).

13. The method according to one of claims 10 to 12, **characterized in that** the second fluid flow has a speed component that is directed upward in the vertical direction (V).

14. The method according to one of claims 10 to 13, **characterized in that** the fluid of the first and/or the second fluid flow is air, particularly compressed ambient air.

## Revendications

1. Dispositif de transport pour le transport de récipients, en particulier d'ébauches (1), comprenant une voie d'acheminement (2) s'étendant le long d'une direction d'acheminement (F) et un canal d'entraînement (3) disposé parallèle à celle-ci, dans lequel la voie d'acheminement (2) présente un guide-récipients (8) comprenant une fente de guidage (7) s'étendant dans la direction d'acheminement (F) et dans lequel un premier groupe (5) de canaux fluidiques (4) disposés au-dessus de la fente de guidage (7) est prévu, lequel est relié en action fluidique avec la voie d'acheminement (2) et l'au moins un canal d'entraînement (3),
**caractérisé en ce**
**qu'**un second groupe (11) de canaux fluidiques (4) disposés en-dessous de la fente de guidage (7) est relié en action fluidique avec la voie d'acheminement (2) et avec le canal d'entraînement (3).

2. Dispositif de transport selon la revendication 1, **caractérisé en ce que** les canaux fluidiques (4) du premier et du second groupe (5, 11) sont distants entre eux d'entre 5 et 30 mm dans un sens (V) vertical étant vertical au sens d'acheminement (F).

3. Dispositif de transport selon l'une des revendications précédentes, **caractérisé en ce que** le guide-récipients (8) présente une surface de guidage (10) et dans lequel les canaux fluidiques (4) du second groupe (11) sont distants de la surface de guidage (10) d'entre 5 et 25 mm dans le sens vertical (V).

4. Dispositif de transport selon l'une des revendications précédentes, **caractérisé en ce que** les canaux fluidiques (4) du second groupe (11) sont disposés décalés par rapport aux canaux fluidiques (4) du premier groupe (5) dans une vue aérienne le long du sens vertical (V).

5. Dispositif de transport selon l'une des revendications précédentes, **caractérisé en ce que** le canal d'entraînement (3) et la voie d'acheminement (2) sont respectivement séparés l'un de l'autre par une paroi latérale (6), dans lequel les canaux fluidiques (4) sont disposés et/ou formés dans la paroi latérale (6).

6. Dispositif de transport selon l'une des revendications précédentes, **caractérisé en ce que** les canaux fluidiques (4) du second groupe (11) sont disposés obliques par rapport au sens d'acheminement (F) et un sens transversal (Q) vertical à celui-ci.

7. Dispositif de transport selon l'une des revendications précédentes, **caractérisé en ce que** les canaux fluidiques (4) du second groupe (11) sont disposés obliques par rapport au sens vertical (V).

8. Dispositif de transport selon l'une des revendications précédentes, **caractérisé en ce que** le canal d'entraînement (3) est relié à un compresseur de fluide, dans lequel le compresseur de fluide est équipé de préférence pour comprimer l'air environnant.

9. Installation de moulage par soufflage comprenant un dispositif de soufflage pour la transformation par soufflage d'ébauches et au moins un dispositif d'alimentation pour alimenter les ébauches dans le dispositif de soufflage, dans lequel le dispositif d'alimentation présente au moins un dispositif de transport selon l'une des revendications précédentes.

10. Procédé de transport de récipients, en particulier d'ébauches (1) dans un dispositif de transport selon l'une des revendications 1 à 8, dans lequel les récipients sont amenés au dispositif de transport et transportés le long d'un sens d'acheminement (F) par sollicitation avec un premier courant fluidique, **caractérisé en ce que** les récipients sont sollicités avec un second courant fluidique pendant le transport, dans lequel le second courant fluidique agit sur les récipients dans le sens vertical (V) en-dessous du premier courant fluidique.

11. Procédé selon la revendication 10, **caractérisé en ce que** les récipients reposent sur le guide-récipients (8) par une bague de goulot (9), dans lequel le premier courant fluidique agit sur les récipients au-dessus de la bague de goulot (9) et le second courant fluidique agit en-dessous de la bague de goulot (9).

12. Procédé selon la revendication 10 ou 1, **caractérisé en ce que** le premier et le second flux d'air agissent de manière opposée sur les récipients au-moins par rapport à un sens transversal (Q).

13. Procédé selon l'une des revendications 10 à 12, **caractérisé en ce que** le second courant fluidique présente une composante de vitesse dirigée vers le haut dans le sens vertical (V).

14. Procédé selon l'une des revendications 10 à 13, **caractérisé en ce que** le fluide du premier et/ou du second courant fluidique est de l'air, en particulier de l'air environnant comprimé.
